# EUROPÄISCHE PATENTSCHRIFT

(11) **EP 1 545 282 B1**
(45) Veröffentlichungstag und Bekanntmachung des Hinweises auf die Patenterteilung: **29.08.2007**
(21) Anmeldenummer: 03798916.7
(22) Anmeldetag: 22.09.2003
(51) Int. Cl.: A47J 43/07

(54) **ARBEITSWERKZEUG FÜR KÜCHENGERÄTE**
WORK TOOL FOR KITCHEN APPLIANCES
OUTIL DESTINE A DES APPAREILS DE CUISINE

(30) Priorität: 25.09.2002 DE 10244603
(43) Veröffentlichungstag der Anmeldung: 29.06.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI)
(86) Internationale Anmeldenummer: PCT/EP2003/010527
(87) Internationale Veröffentlichungsnummer: WO 2004/030504

(56) Entgegenhaltungen:
- FR-A- 2 378 485
- FR-A- 2 579 442
- US-A- 2 398 932

## Beschreibung

Die vorliegende Erfindung betrifft ein Arbeitswerkzeug für ein Küchengerät mit einer Antriebswelle, die ein erstes und ein zweites axiales Ende aufweist, einer Kupplungseinrichtung, die an dem ersten axialen Ende der Antriebswelle drehfest angeordnet ist, zur Aufnahme eines Drehmoments und einer Funktionseinheit, die an dem zweiten axialen Ende der Antriebswelle fest oder abnehmbar angebracht ist zum Bearbeiten eines Lebensmittels. Insbesondere betrifft die vorliegende Erfindung ein Drehmesser für Zerkleinerungsgeräte zum Einsatz im Küchenbereich.

Zerkleinerungsgeräte, sogenannte Chopper, dienen in erster Linie zum Zerkleinern von Lebensmitteln. Die Chopper können aber auch zum Mischen von flüssigen beziehungsweise breiartigen Lebensmitteln sowie zum Schlagen von Sahne und dergleichen verwendet werden. Mit ihrer Hilfe kann aus festen Lebensmitteln beispielsweise Mus hergestellt werden. Diese Zerkleinerungsgeräte können aber auch als sogenannte Ice-Crusher zur Zerkleinerung von Eiswürfeln Verwendung finden. Da die Eiswürfel jedoch eine sehr hohe Härte besitzen, wird das Hackmesser beziehungsweise dessen Antriebseinheit oder Kupplung sehr stark beansprucht.

Der Aufbau eines Choppers besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden.

Ein gattungsgemäßes Arbeitswerkzeug für ein Zerkleinerungsgerät einer elektrischen Küchenmaschine ist aus der deutschen Offenlegungsschrift DE 41 28 456 A1 bekannt. Ein weiteres Arbeitswerkzeug ist aus des FR 2378485 bekannt. Das dort beschriebene Zerkleinerungsgerät zum Zerkleinern von Nahrungsmitteln weist ein in einem Behälter auf einem Lagerzapfen drehbar gelagertes und von einer Abtriebswelle und einem Messer gebildetes Arbeitswerkzeug auf, bei dem die Abtriebswelle über eine Kupplungsvorrichtung mit einem Antriebsmotor einer Küchenmaschine kuppelbar ist. Die Abtriebswelle weist hohlzylindrische Gestalt auf.

Aus der deutschen Offenlegungsschrift DE 100 01 455 A1 ist ebenfalls eine Vorrichtung zum Zerkleinern von Lebensmitteln bekannt. Sie weist ein Zerkleinerungswerkzeug auf, das im Wesentlichen aus einer Werkzeugspindel und damit verbundenen Klingen gebildet ist. Die Werkzeugspindel, d.h. die Antriebswelle, ist dabei ein leicht konisches, hohles Drehteil aus Metall, das an seinem unteren breiten Ende offen ist. Am oberen Ende der Werkzeugspindel ist eine Verzahnung vorhanden, die als Kupplung für die Kraftübertragung von einer Antriebseinheit auf die Zerkleinerungsvorrichtung dient. Das untere Ende der Werkzeugspindel wird durch eine Stiftaufnahme aus Weichmetall verschlossen. Nachteilig an diesen Lösungen ist, dass über die Abtriebswelle beziehungsweise Werkzeugspindel Schläge von dem Arbeitswerkzeug insbesondere beim Zerkleinern von sehr harten Lebensmitteln ungedämpft auf die Kupplung des Arbeitswerkzeugs und die Antriebseinheit übertragen werden. Daher ist die Kupplung einem hohen Verschleiß ausgesetzt.

Die Aufgabe der vorliegenden Erfindung besteht darin, die Kupplung eines Küchengeräts zwischen der Antriebseinheit und dem Arbeitswerkzeug vor starken Schlägen oder Stößen zu bewahren.

Erfindungsgemäß wird diese Aufgabe gelöst durch ein Arbeitswerkzeug für ein Küchengerät mit einer Antriebswelle, die ein erstes und ein zweites axiales Ende aufweist, einer Kupplungseinrichtung, die an dem ersten axialen Ende der Antriebswelle drehfest angeordnet ist zur Aufnahme eines Drehmoments und einer Funktionseinheit, die an dem zweiten axialen Ende der Antriebswelle fest oder abnehmbar angebracht ist zum Bearbeiten eines Lebensmittels, wobei ein von der Kupplungseinrichtung verschiedener Teil der Antriebswelle im Querschnitt ein sternförmiges Profil besitzt.

Der Vorteil des sternförmigen Profils der Antriebswelle liegt in der definiert einstellbaren Elastizität. Bei starken Schlägen oder Stößen kann sich die Antriebswelle in sich verwinden, so dass die Schläge nur gedämpft an die Kupplung weitergeleitet werden. Somit ist die Kupplung weniger belastet und ihre Lebensdauer kann deutlich erhöht werden. Diese Ausgestaltung der Antriebswelle ist ferner sehr kostengünstig, da die Bedämpfung keiner zusätzlichen Teile bedarf. Auch die Gestaltung des Werkzeugs an sich ist nicht mit höheren Kosten verbunden gegenüber den Lösungen gemäß dem Stand der Technik.

Vorteilhafterweise besitzt das Arbeitswerkzeug ein sternförmiges Profil mit drei oder mehr Spitzen, insbesondere drei, vier oder fünf Spitzen. Damit ist eine gewisse Steifigkeit der Antriebswelle zwar gegeben, sie kann sich längs der Drehachse dennoch hinreichend verwinden.

Die Antriebswelle ist vorteilhafterweise aus einem elastischen Kunststoff, der eine entsprechende Verwindung der Antriebswelle zuläßt und dennoch ausreichend steif ist, um ein hinreichendes Drehmoment auf beispielsweise ein Messer zu übertragen. Bevorzugt wird hierfür der Kunststoff POM eingesetzt, der diese Eigenschaften besitzt. Neben diesem guten Elastizitätsverhalten besitzt POM auch hervorragende Abriebeigenschaften, so dass er bedenkenlos für ein Gleitlager eingesetzt werden kann.

Die Antriebswelle kann aus einem Kunststoff gespritzt sein. Dabei kann die Funktionseinheit, beispielsweise das Messer, in die Antriebswelle gespritzt beziehungsweise gegossen werden.

Vorteilhafterweise ist eine Kupplungseinrichtung einteilig mit der Antriebswelle verbunden. Damit kann das gesamte Arbeitswerkzeug einteilig als Spritzgussteil hergestellt werden.

Die Funktionseinheit an dem Arbeitswerkzeug kann als Messer, Schlagscheibe, Rührbesen und dergleichen ausgestaltet sein. Dementsprechend kann das jeweilige Küchengerät als Zerkleinerungsgerät, Rührgerät etc. verwendet werden.

Die vorliegende Erfindung wird nun anhand der beigefügten Zeichnungen näher erläutert, in denen zeigen:
- Figur 1: eine Querschnittsansicht auf einen erfindungsgemäßen Chopper; und
- Figur 2: eine Draufsicht auf ein erfindungsgemäßes Arbeitswerkzeug.

Die nachfolgend beschriebenen Ausführungsformen stellen bevorzugte Ausführungsbeispiele der vorliegenden Erfindung dar.

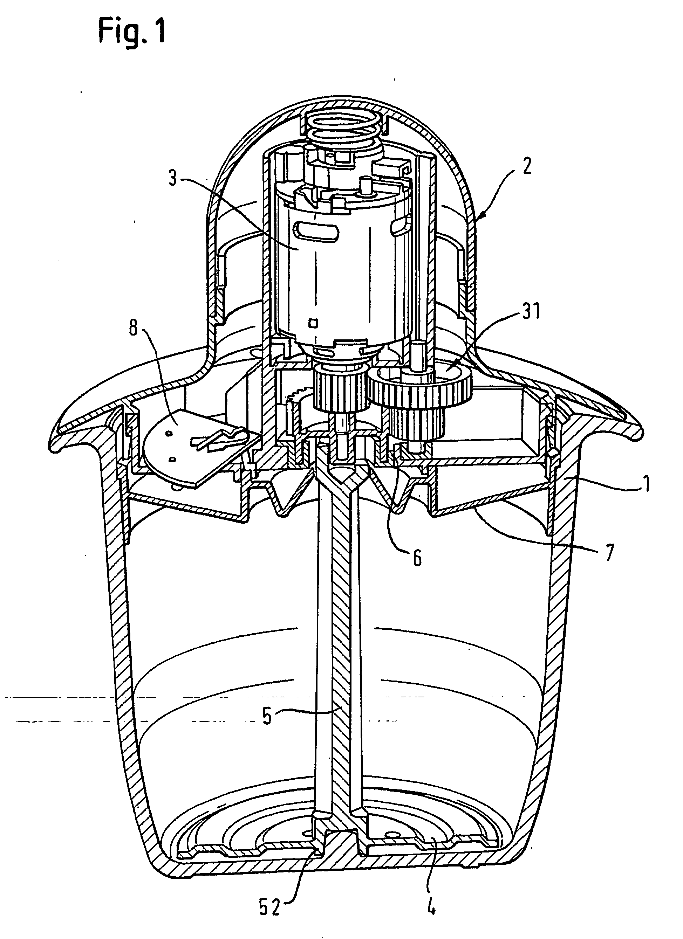

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist ferner einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sicherheitsschalter 8 den Betrieb des Choppers.

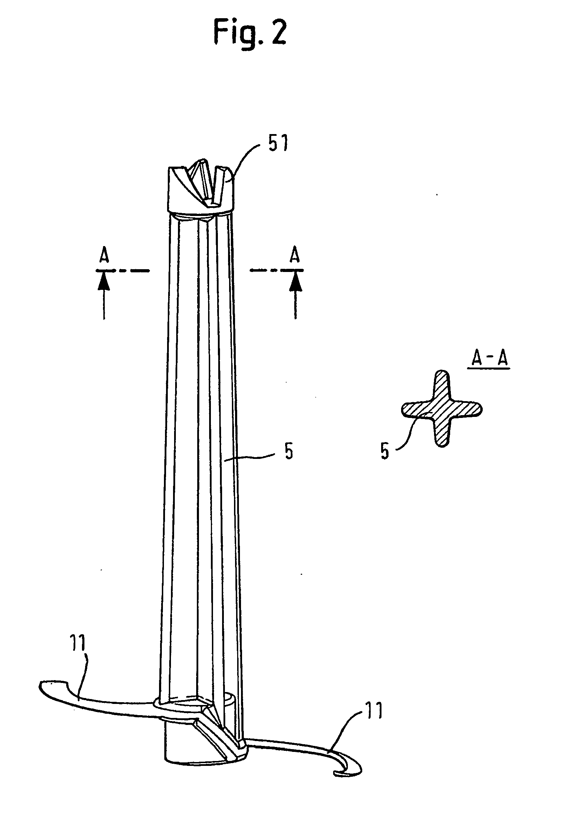

In Figur 2 ist die Draufsicht auf ein Arbeitswerkzeug gemäß der vorliegenden Erfindung dargestellt, das in einen Chopper nach Figur 1 eingesetzt werden kann. Die Funktionseinheit 11 ist als Messer ausgestaltet und besitzt im vorliegenden Fall zwei diametral gegenüberliegenden Klingen. Das Messer ist in ein Ende der Antriebswelle 5 eingespritzt.

Die Antriebswelle 5 besitzt ein sternförmiges Profil, wie dies in dem Schnitt A-A in Figur 2 dargestellt ist. Das Sternprofil umfasst vier am Umfang gleich verteilte Spitzen. Die Spitzen können, wie in der Draufsicht dargestellt ist, entsprechende Kanten aufweisen oder, wie in dem Schnitt A-A dargestellt ist, abgerundet sein. Die Rundungen erweisen sich beim Reinigen des Arbeitswerkzeugs als vorteilhaft.

An dem der Funktionseinheit 11 gegenüberliegenden Ende der Antriebswelle 5 ist eine Kupplung 51 angeordnet. Sie besteht im vorliegenden Fall aus drei Mitnehmern die am Umfang der Antriebswelle angeordnet sind und sich in axialer Richtung der Antriebswelle 5 erstreckt. Sie greifen in ein entsprechendes Abtriebskupplungselement des in Figur 1 dargestellten Untersetzungsgetriebes 31 ein.

An dem Ende der Antriebswelle 5, an dem die Funktionseinheit 11 angeordnet ist, ist stirnseitig eine Lagerbuchse 52 angeformt. Diese Lagerbuchse 52 gewährleistet die radiale Fixierung des Arbeitswerkzeugs am Boden des Behälters 1. Sie läuft auf einem Zapfen, der am Boden des Behälters 1 im Zentrum angeformt ist.

Die Sternform des Profils der Antriebswelle 12 gewährleistet ein gewisses Verwinden entlang ihrer Achse. In Abhängigkeit der gewünschten Steifigkeit kann das Sternprofil auch mit drei, fünf oder mehr Enden ausgestattet sein. Ebenso kann die Wandstärke der einzelnen Enden des Sterns variiert werden. Ferner ist es möglich, den Zentralbereich des Sterns zu verstärken.

## Patentansprüche

1. Arbeitswerkzeug für ein Küchengerät mit
einer Antriebswelle (5), die ein erstes und ein zweites axiales Ende aufweist,
einer Kupplungseinrichtung (51), die an dem ersten axialen Ende der Antriebswelle (5) drehfest angeordnet ist zur Aufnahme eines Drehmoments und
einer Funktionseinheit (11), die an dem zweiten axialen Ende der Antriebswelle (5) fest oder abnehmbar angebracht ist zum Bearbeiten eines Lebensmittels,
**dadurch gekennzeichnet, dass**
ein von der Kupplungseinrichtung (51) verschiedener Teil der Antriebswelle (5) im Querschnitt ein sternförmiges Profil besitzt.

2. Arbeitswerkzeug nach Anspruch 1, wobei das sternförmige Profil drei oder mehr Spitzen besitzt.

3. Arbeitswerkzeug nach Anspruch 2, wobei das sternförmige Profil vier oder fünf Spitzen besitzt.

4. Arbeitswerkzeug nach einem der Ansprüche 1 bis 3, wobei die Antriebswelle (5) ein elastisches Kunststoffmaterial, bevorzugt POM, aufweist.

5. Arbeitswerkzeug nach einem der Ansprüche 1 bis 4, wobei die Antriebswelle (5) ein Kunststoffspritzgußteil ist.

6. Arbeitswerkzeug nach einem der Ansprüche 1 bis 5, wobei die Kupplungseinrichtung (51) einteilig mit der Antriebswelle (5) geformt ist.

7. Arbeitswerkzeug nach einem der Ansprüche 1 bis 6, wobei die Funktionseinheit (11) in die Antriebswelle gegossen oder gespritzt ist.

8. Arbeitswerkzeug nach einem der Ansprüche 1 bis 7, wobei die Funktionseinheit (11) ein Messer, eine Schlagscheibe oder einen Rührbesen umfasst.

9. Küchengerät, insbesondere Zerkleinerungsgerät, mit einem Arbeitswerkzeug nach einem der Ansprüche 1 bis 8.

## Claims

1. Work tool for a kitchen appliance with a drive shaft (5), which has a first and a second axial end, a coupling device (51), which is arranged at the first axial end of the drive shaft (5) in rotationally fast manner for acceptance of a torque, and a functional unit (11), which is fixedly or detachably mounted at the second axial end of the drive shaft (5) for processing a foodstuff, **characterised in that** a part of the drive shaft (5) which is different from the coupling device (51) has a star-shaped profile in cross-section.

2. Work tool according to claim 1, wherein the star-shaped profile has three or more points.

3. Work tool according to claim 2, wherein the star-shaped profile has four or five points.

4. Work tool according to one of claims 1 to 3, wherein the drive shaft (5) comprises a resilient plastics material, preferably POM.

5. Work tool according to one of claims 1 to 4, wherein the drive shaft (5) is a plastics material injection-moulded part.

6. Work tool according to one of claims 1 to 5, wherein the coupling device (51) is formed integrally with the drive shaft (5).

7. Work tool according to one of claims 1 to 6, wherein the functional unit (11) is cast or injection-moulded in the drive shaft.

8. Work tool according to one of claims 1 to 7, wherein the functional unit (11) is a knife, a beater disc or a stirring whisk.

9. Kitchen appliance, particularly comminuting appliance, with a work tool according to one of claims 1 to 8.

## Revendications

1. Outil de travail destiné à un appareil de cuisine comprenant
un arbre d'entraînement (5), qui présente une première et une seconde extrémités axiales, un dispositif d'accouplement (51), qui est disposé de façon solidaire en rotation sur la première extrémité axiale de l'arbre d'entraînement (5) pour la réception d'un couple et une unité fonctionnelle (11), qui est placée de façon fixe ou amovible sur la seconde extrémité axiale de l'arbre d'entraînement (5) pour le traitement d'une denrée alimentaire,
**caractérisé en ce que**
une partie, différente du dispositif d'accouplement (51), de l'arbre d'entraînement (5) présente en section un profil en forme d'étoile.

2. Outil de travail selon la revendication 1, le profil en forme d'étoile présentant trois ou plus de trois pointes.

3. Outil de travail selon la revendication 2, le profil en forme d'étoile présentant quatre ou cinq pointes.

4. Outil de travail selon l'une quelconque des revendications 1 à 3, l'arbre d'entraînement (5) présentant un matériau plastique élastique, de préférence du POM.

5. Outil de travail selon l'une quelconque des revendications 1 à 4, l'arbre d'entraînement (5) étant une pièce moulée injectée en plastique.

6. Outil de travail selon l'une quelconque des revendications 1 à 5, le dispositif d'accouplement (51) étant formé d'une seule pièce avec l'arbre d'entraînement (5).

7. Outil de travail selon l'une quelconque des revendications 1 à 6, l'unité fonctionnelle (11) étant moulée ou injectée dans l'arbre d'entraînement.

8. Outil de travail selon l'une quelconque des revendications 1 à 7, l'unité fonctionnelle (11) comprenant un couteau, un disque batteur ou un balai mélangeur.

9. Appareil de cuisine, en particulier appareil de broyage, avec un outil de travail selon l'une quelconque des revendications 1 à 8.
